(19) Europäisches Patentamt / European Patent Office / Office européen des brevets

(11) EP 2 915 692 A1

(12) EUROPEAN PATENT APPLICATION
published in accordance with Art. 153(4) EPC

(43) Date of publication:
09.09.2015 Bulletin 2015/37

(51) Int Cl.:
B60L 15/20 (2006.01)   B60T 8/00 (2006.01)
B60T 8/17 (2006.01)   B60W 10/188 (2012.01)
B60W 30/02 (2012.01)

(21) Application number: 13850689.4

(22) Date of filing: 10.10.2013

(86) International application number:
PCT/JP2013/077604

(87) International publication number:
WO 2014/069206 (08.05.2014 Gazette 2014/19)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 02.11.2012 JP 2012242315

(71) Applicant: Hitachi Automotive Systems, Ltd.
Hitachinaka-shi
Ibaraki 312-8503 (JP)

(72) Inventor: SUZUKI, Keisuke
Atsugi-shi
Kanagawa 243-8510 (JP)

(74) Representative: Hoefer & Partner Patentanwälte
mbB
Pilgersheimer Straße 20
81543 München (DE)

(54) VEHICLE CONTROL DEVICE

(57)   An object of the present invention is to provide a vehicle control device that is capable of effectively suppressing drive slip even in a case where a speed reduction mechanism and a drive shaft are provided between a motor and a driving wheel. In the present invention, a slip state of the driving wheel is detected on the basis of a difference between a rotation speed of the motor connected to the driving wheel of a vehicle via the speed reduction mechanism and the drive shaft and a rotation speed of a driven wheel, then when the slip state is detected, a traction control that reduces the number of revolutions of the driving wheel is performed.

FIG.3

## Description

## TECHNICAL FIELD

The present invention relates to a vehicle control device performing a traction control of a vehicle whose driving wheel can be driven by a motor.

## BACKGROUND ART

Patent Document 1 has disclosed a technique of performing a traction control that suppresses drive slip of a driving wheel on the bases of a wheel speed detected by a wheel speed sensor.

## CITATION LIST

## PATENT DOCUMENT

Patent Document 1: Japanese Patent Application Publication No. JP2011-097826

## SUMMARY OF THE INVENTION

## TECHNICAL PROBLEM

However, in a case where a motor and the driving wheel are connected via a speed reduction mechanism and a drive shaft, when the traction control is performed using the wheel speed of the driving wheel, since a phase difference in rotation speed (the number of revolutions) occurs between the motor and the driving wheel, it is difficult to suppress the.drive slip effectively.

An obj ect of the present invention is to provide a vehicle control device that is capable of effectively suppressing the drive slip even in the case where the speed reduction mechanism and the drive shaft are provided between the motor and the driving wheel.

## SOLUTION TO PROBLEM

To achieve the object, a slip state of the driving wheel is detected on the basis of a difference between a rotation speed of the motor that is connected to the driving wheel of the vehicle via the speed reduction mechanism and the drive shaft and a rotation speed of a driven wheel, then when the slip state is detected, a traction control that reduces the number of revolutions of the driving wheel is performed.

## EFFECTS OF THE INVENTION

Therefore, a slip state can be detected on the basis of the rotation speed of the motor whose phase is higher (faster or earlier) than that of the rotation speed of the driving wheel, and by achieving an early intervention of the traction control, the drive slip can be effectively suppressed.

## BRIEF DESCRIPTION OF THE DRAWINGS

Fig. 1 is a system block diagram of an electric vehicle to which a vehicle control device of an embodiment 1 is applied.
Fig. 2 is a block diagram showing a relationship between controllers of the vehicle control device of the embodiment 1.
Fig. 3 is a flow chart showing a traction control process in a brake ECU of the embodiment 1.
Fig. 4 is a block diagram showing a TCS control-intervening torque command value calculationprocess of the embodiment 1.
Fig. 5 is a torque down ratio calculation map for the TCS control-intervening torque command value calculation process of the embodiment 1.
Fig. 6 is a block diagram showing a TCS control-in-progress torque command value calculationprocess of the embodiment 1.
Fig. 7 is a time chart of the traction control of the embodiment 1.
Fig. 8 is a block diagram showing a relationship between the controllers of the vehicle control device of an embodiment 2.
Fig. 9 is a flow chart showing a traction control process in the brake ECU of the embodiment 2.
Fig. 10 is a time chart of the traction control of the embodiment 2.

## EMBODIMENTS FOR CARRYING OUT THE INVENTION

[Embodiment 1]

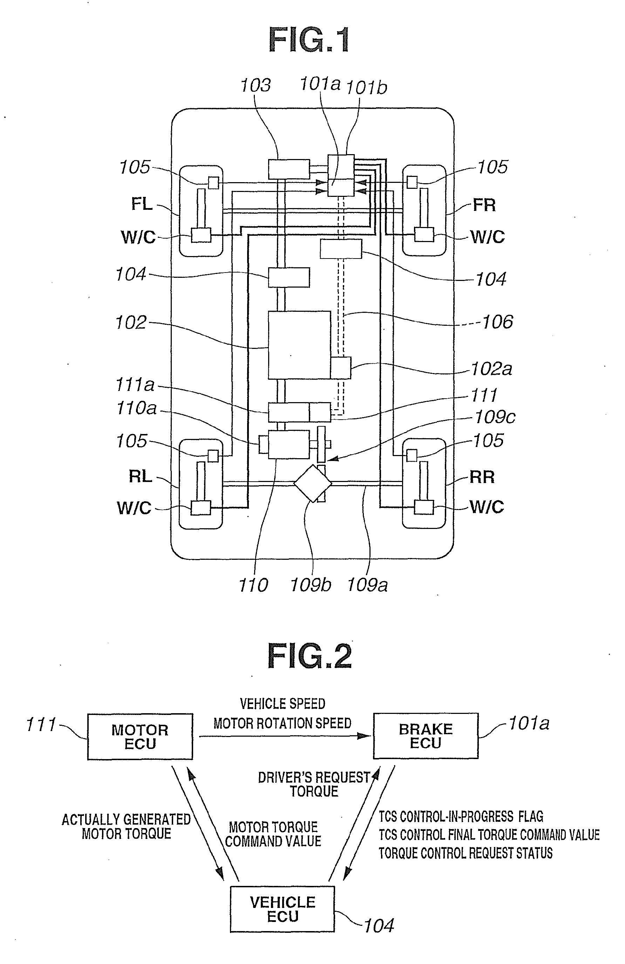

Fig. 1 is a system block diagram of an electric vehicle to which a vehicle control device of an embodiment 1 is applied. Rear wheels RR, RL are connected to a motor 110 via a drive shaft 109a, a differential gear 109b and a speed reduction mechanism 109c. This electric vehicle travels by driving the rear wheels RR, RL by a driving torque of the motor 110. Also upon deceleration, the electric vehicle travels while decelerating by a regenerative torque of the motor 110. The motor 110 has a resolver 110a (a motor rotation speed detection device) that detects a motor rotation angle (a motor rotation speed). The motor 110 controls the driving torque and the regenerative torque by power received from and transmitted to an inverter 111a that is operated according to the detected motor rotation speed and a command of a motor ECU 111. The inverter 111a is connected to a high voltage battery 102. A charge state and a heat generation state of the high voltage battery 102 are observed and controlled by a battery ECU 102a. The high voltage battery 102 is connected to a low voltage battery 103 that is rechargeable by decreasing voltage through a DC-DC converter 104.

A brake device 101 is an electrical mechanical integrated device formed from a brake ECU 101a and a hydraulic pressure control unit 101b. The hydraulic pressure control unit 101b is provided with a pump and an electromagnetic valve etc. that can control a hydraulic pressure of a wheel cylinder W/C of each of front wheels FR, FL and the rear wheels RR, RL. The hydraulic pressure control unit 101b controls the wheel cylinder pressure on the basis of a command of the brake ECU 101a by power supplied from the low voltage battery 103. In the hydraulic pressure control unit 101b, a gate-out valve, a pressure increasing valve and a pressure reducing valve are provided between a master cylinder and a hydraulic passage corresponding to each wheel cylinder W/C. The hydraulic pressure control unit 101b is configured to be able to control (increase and reduce) the wheel cylinder pressure irrespective of driver's brake pedal operation.

Wheel speed sensors 105a, 105b, 105c and 105d (a wheel speed detection device) that detect a wheel speed of the respective wheels are connected to the brake ECU 101a, and detect each wheel speed. Further, the brake ECU 101a has a traction control section or unit (hereinafter called TCS control section or unit) that suppresses drive slip of a driving wheel. This TCS control section reads the motor rotation speed detected by the resolver 110a, a driven wheel rotation speed and driving wheel rotation speed detected by the wheel speed sensors 105, and computes a TCS control final torque command value for suppressing the driving wheel slip, then outputs this command value to an after-mentioned vehicle ECU 104, thereby limiting a motor torque and suppressing the drive slip. Details of the TCS control will be explained later.

The vehicle ECU 104 detects operation amounts of an accelerator pedal and a brake pedal, which are operated by the driver, and calculates driver's request torque according to a vehicle speed, then outputs the request torque to the motor ECU 111 and the brake ECU 101a. The motor ECU 111, the battery ECU 102a, the brake ECU 101a and the vehicle ECU 104 are connected together through a CAN communication line 106, and these ECUs can transmit and receive information between them.

Fig. 2 is a block diagram showing a relationship between the controllers of the vehicle control device of the embodiment 1. The vehicle ECU 104 calculates a reference motor driving torque that is the driver's request torque according to driver's shift operation, driver's accelerator pedal operation and the vehicle speed. Here, in a case where there is no torque command from the brake ECU 101a, i.e. in a case where a torque control request status is non-control request and also a TCS control flag is Low, the vehicle ECU 104 outputs the driver's request torque as a motor torque command value to the motor ECU 111. On the other hand, in a case where the torque command of the brake ECU 101a is present, i.e. in a case where the torque control request status is a torque down request and also the TCS control flag is High, the vehicle ECU 104 calculates the TCS control final torque command value on the basis of a TCS control-intervening torque command value and a TCS control-in-progress torque command value, and outputs this TCS control final torque command value as the motor torque command value to the motor ECU 111.

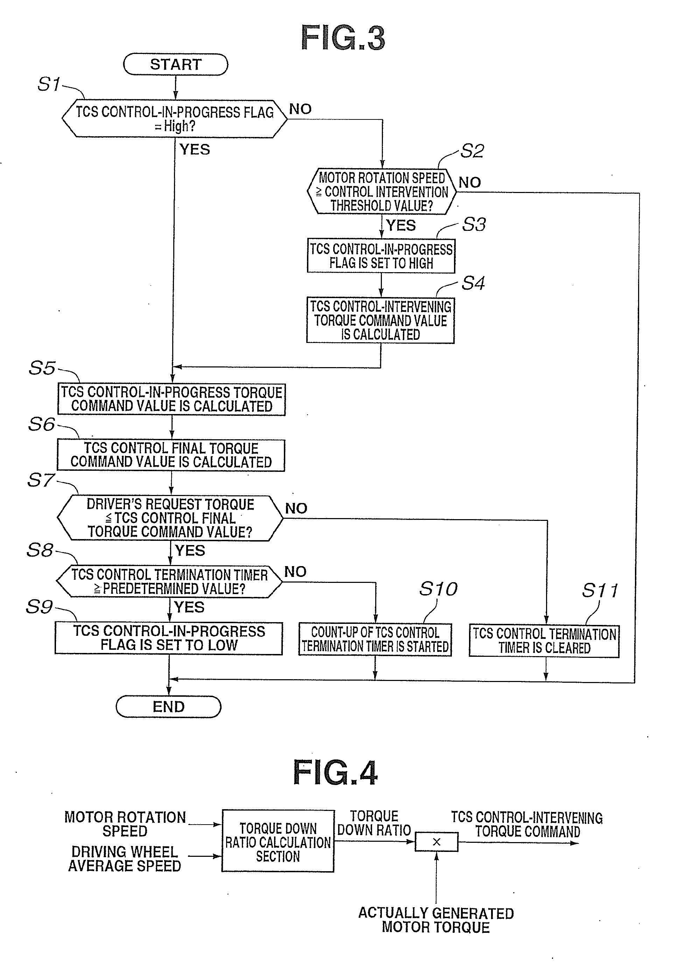

Fig. 3 is a flow chart showing a traction control process in the brake ECU of the embodiment 1. At step S1, a judgment is made as to whether or not the TCS control-in-progress flag is High. When judging that it is High, the routine proceeds to step S5. When judging that it is Low, the routine proceeds to step S2. At step S2, a judgment is made as to whether or not the motor rotation speed is a control intervention threshold value or greater. When judging that it is the control intervention threshold value or greater, the routine proceeds to step S3. When judging that it is not the control intervention threshold value or greater, the present control flow is ended. Here, the control intervention threshold value is a value obtained by adding a predetermined rotation speed to the vehicle speed. At step S3, the TCS control flag is set to High.

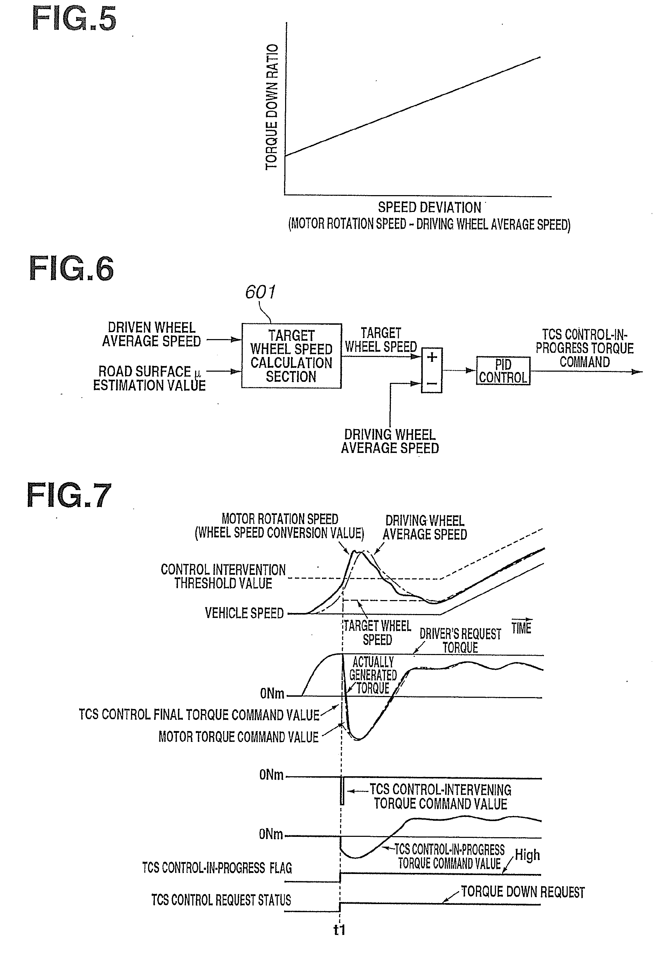

At step S4, the TCS control-intervening torque command value is calculated. Here, the TCS control-intervening torque command value will be explained. Fig. 4 is a block diagram showing the TCS control-intervening torque command value calculation process of the embodiment 1. Fig. 5 is a torque down ratio calculation map for the TCS control-intervening torque command value calculation process of the embodiment 1. At step S4, the motor rotation speed and a driving wheel average speed are read, and a speed deviation (a speed difference) between the motor rotation speed and the driving wheel average speed is computed. This speed deviation indicates the driving torque.

In the torque down ratio calculation map, a torque down ratio is set so that as the speed deviation becomes larger, the torque down ratio becomes larger. The torque down ratio is calculated according to the speed deviation. Then, by multiplying an actually generated motor torque (in this case, the reference motor driving torque) by the torque down ratio, the TCS control-intervening torque command value is calculated. Here, as the speed deviation, for instance, a value indicating a toque that acts on the driving wheel, such as a driving wheel average acceleration, a motor rotation acceleration and a road surface μ estimation value, could be used.

That is, "the speed deviation is large" means that a distortion amount in the drive shaft 109a and the speed reduction mechanism 109c between the motor 110 and the driving wheel is large, and it is conceivable that such a large torque acts on the driving wheel. Thus, first the torque down ratio is set according to the speed deviation. By setting the torque down ratio so that as the speed deviation becomes larger, the torque down ratio becomes larger, the driving wheel slip upon increase of the rotation speed (the number of revolutions) when the rotation speed of the driving wheel is judged to exceed the control intervention threshold value is suppressed.

At step S5, the TCS control-in-progress torque command value is calculated. Fig. 6 is a block diagram showing the TCS control-in-progress torque command value calculation process of the embodiment 1. First a target wheel speed calculation section 601 reads a driven wheel average speed and the road surface μ estimation value. The driven wheel average speed is read as a value indicating the vehicle speed. Further, the road surface μ estimation value is determined by the following relational expression.

$$(\text{expression 1})$$

$$I \cdot d\omega/dt = \mu W_D \cdot R - T_B + T_P$$

$I$ : tire inertia (for one wheel), $d\omega/dt$ : driving wheel average acceleration, $\mu$ : coefficient of friction between tire and road surface, $W_D$ : driving wheel load (for one wheel), $R$ : tire active radius (or a tire effective radius), $T_B$ : driving wheel braking torque average, $T_P$ : driving motor torque

Here, the driving wheel load $W_D$ is calculated from a load shift amount $\Delta W_{Lon}$ calculated by the following (expression 2). That is, the driving wheel load is calculated by operation of addition/subtraction of the load shift amount and a static load.

$$(\text{expression 2})$$

$$W \cdot X_G \cdot H_G = 2 \cdot \Delta W_{Lon} \cdot L$$

$W$ : gross weight of vehicle, $X_G$ : vehicle longitudinal acceleration (sensor value), $H_G$ : height of gravitational center, $\Delta W_{Lon}$ : load shift amount (for one wheel), $L$ : wheelbase

Then, a target wheel speed is calculated by adding a predetermined speed corresponding to the road surface μ estimation value to the vehicle speed that is the driven wheel average speed. Here, when performing the addition operation of the predetermined speed, the predetermined speed is added so that as the road surface μ becomes larger, the predetermined speed becomes greater. That is, if the road surface μ is large, decrease in tire force (tire grip) is gradual with respect to increase in slip rate, and it can be expected that the tire force increases up to some extent of the slip rate. In contrast to this, if the road surface μ is small, decrease in tire force (tire grip) is sharp with respect to increase in slip rate, and there is not much prospect that the tire force increases with respect to increase in slip rate.

Next, a deviation (a difference) between the target wheel speed set by the above operation and the driving wheel average speed is calculated, and such a motor torque that this deviation is zero is calculated by PID control, then this value is outputted as the TCS control-in-progress torque command value.

At step S6, the TCS control final torque command value is calculated. More specifically, if a current point is a time of the TCS control intervention, by adding the TCS control-in-progress torque command value to the TCS control-intervening torque command value, a torque command value that satisfies both requests is set as the TCS control final torque command value. Further, if the current point is a time except the TCS control intervention, only the TCS control-in-progress torque command value is outputted as the TCS control final torque command value.

At step S7, a judgment is made as to whether or not the driver's request torque is the TCS control final torque command value or less. When judging that it is the TCS control final torque command value or less, torque limitation by the TCS control is judged to be unnecessary, and the routine proceeds to step S8. When the driver's request torque is greater than the TCS control final torque command value, the torque limitation by the TCS control is judged to be necessary, and the routine proceeds to step S11, then a TCS control termination timer is cleared. That is, it is judged that continuation of the TCS control is needed.

At step S8, a judgment is made as to whether or not the TCS control termination timer is a predetermined value or greater. When judging that it is the predetermined value or greater, the routine proceeds to step S9, and the TCS control flag is set to Low, namely that the TCS control is ended. When the TCS control termination timer is less than the predetermined value, the routine proceeds to step S10, and count-up of the TCS control termination timer is started.

Next, operation according to the above control flow will be explained. Fig. 7 is a time chart of the traction control of the embodiment 1. The vehicle control device of the embodiment 1 makes a judgment of the intervention of the TCS control using not the driving wheel rotation speed but the motor rotation speed. The reason of this is because in the case where elements such as the drive shaft 109a, the differential gear 109b and the speed reduction mechanism 109c intervene between the motor 110 and the driving wheels RR, RL like the electric vehicle of the embodiment 1, these elements have distortion when the torque is applied then a phase in the rotation speed between the motor 110 and the driving wheels is shifted. That is, this is because, if the judgment of the intervention is made on the basis of the driving wheel rotation speed the rise of the driving wheel rotation speed is delayed, and the drive slip can not be effectively suppressed due to the fact that the intervention judgment in itself is delayed.

Therefore, when the motor rotation speed exceeds the control intervention threshold value at time t1, the TCS control intervenes. At this time, from a viewpoint of a control that limits the motor torque by feedforward control, the TCS control - intervening torque command value is provided upon the intervention of the TCS control. This TCS control-intervening torque command value is set according to the speed deviation between the motor rotation speed and the driving wheel average speed. That is, when the speed deviation is large, it can be judged that the distortion amount is also large and the motor torque is large. Thus, by actively performing the torque down, the drive slip is effectively suppressed.

Here, it is conceivable that the judgment of the intervention is made using the driving wheel rotation speed. In this case, since the phase in the driving wheel rotation speed is delayed (or, is lower) as compared to the motor rotation speed, it is conceivable that, for instance, the control intervention threshold value is set to be smaller and the intervention of the TCS control is facilitated. However, in a case where noises are added to (or superposed on) the wheel speed on a bad or rough road, misjudgment of the intervention is made. For this reason, using the motor rotation speed for the judgment of the intervention is beneficial.

After the TCS control-intervening torque command value is provided, the TCS control-in-progress torque command value is outputted by the PID control based on the deviation between the target wheel speed and the driving wheel average speed. In other words, regarding the TCS control-intervening torque command value, although the torque down is executed on the basis of the motor rotation speed, once the TCS control is started, the torque down based on the motor rotation speed is switched or changed to the torque down based on the rotation speed of the driving wheel which rotates stably, then the torque down is performed on the basis of the driving wheel rotation speed. This is because, although the motor rotation speed is effective in detecting initial or early quick drive slip, the motor rotation speed has a tendency to change while oscillating due to vibration of a driveline, and if the traction control is performed using this oscillating motor rotation speed, there is a possibility that a torque down amount will be unstable.

Here, it is conceivable that, since the phase of the motor rotation speed is higher (faster or earlier), by continuously using the motor rotation speed, the control is performed without using a high gain and differential control. However, even if the motor rotation speed can be controlled to the target rotation speed, it is unclear, even from a relationship of the distortion amount, whether the driving wheel rotation speed is in a proper slip state, also there is a possibility that a driving force will be insufficient. Hence, changing the torque down control to the torque down control based on the driving wheel rotation speed is beneficial.

As explained above, the embodiment 1 has the following configuration, operation and effect.

(1-(1)) A vehicle control device comprises: a motor that is connected to a driving wheel of a vehicle via a drive shaft 109a, a differential gear 109b and a speed reduction mechanism 109c and generates a torque to drive the driving wheel; a resolver 110a (a motor rotation speed detection device) that detects a rotation speed of the motor 110; a wheel speed sensor 105 (a wheel speed detection device) that detects a rotation speed of a driven wheel of the vehicle; step S2 that judges whether or not a detected motor rotation speed is a control intervention threshold value or greater (a driving wheel slip state detection unit that detects a slip state of the driving wheel on the basis of a difference between a detected motor rotation speed and a detected driven wheel rotation speed); and a TCS control unit (a traction control unit) that, when it is judged by step S2 that the motor rotation speed is the control intervention threshold value or greater (when the slip of the driving wheel is detected), reduces the number of revolutions of the driving wheel.

Therefore, the slip can be detected early, and an early intervention of the TCS control can be realized.

(2-(2)) In the vehicle control device described in (1-(1)), the TCS control unit reduces a driving torque of the motor 110. That is, since the motor 110 has a quick response, it is possible to improve a response of the torque down.

(3-(3)) In the vehicle control device described in (2-(2)), the TCS control unit provides a braking torque to the motor 110 . By actively providing the braking torque, it is possible to improve a response of the traction control.

(4- (4)) The vehicle control device described in (2-(2)) further comprises: a wheel speed sensor 105 (a second wheel speed detection device) that detects a rotation speed of the driving wheel; and a vehicle ECU 104 (a reference motor driving torque calculation unit) that calculates a reference motor driving torque according to driver's accelerator pedal operation amount, and wherein in the TCS control, a torque down ratio (a torque reduction ratio) with respect to the reference motor driving torque is calculated on the basis of the detected motor rotation speed and a detected driving wheel rotation speed, and the driving torque of the motor 110 is reduced on the basis of the calculated torque down ratio (the calculated torque reduction ratio) . Therefore, a proper torque down ratio with consideration given to the slip state (a road surface state) can be set.

(5-(8)) In the vehicle control device described in (2-(2)), the TCS control unit calculates a reduction amount of the driving torque of the motor from a difference between the detected motor rotation speed and a detected driving wheel rotation speed. Therefore, a proper torque down ratio with consideration given to the slip state (a road surface state) can be set.

(6-(9)) A vehicle control device comprises: a motor 110 that is connected to a driving wheel of a vehicle via a speed reduction mechanism 109c and a drive shaft 109a and generates a torque to drive the driving wheel; a resolver 110a (a motor rotation speed detection device) that detects a rotation speed of the motor 110; a wheel speed sensor 105 (a driven wheel speed detection device) that detects a rotation speed of a driven wheel of the vehicle; a wheel speed sensor 105 (a driving wheel speed detection device) that detects a rotation speed of a driving wheel of the vehicle; step S2 (a driving wheel slip state detection unit) that detects a slip state of the driving wheel on the basis of a difference between a detected motor rotation speed and a detected driven wheel rotation speed; step S4 (a first traction control unit) that reduces a driving torque generated by the driving wheel when the slip of the driving wheel is detected by step S2; and step S5 (a second traction control unit) that suppresses the driving torque generated by the driving wheel on the basis of a detected driving wheel rotation speed and a detected driven wheel speed, subsequently to step S4.

Therefore, by detecting the slip early, an early intervention of the TCS control can be realized, and it is possible to suppress vibration thanks to improvement in control accuracy.

(7-(10)) In the vehicle control device described in (6-(9)), step S4 (the first traction control unit) reduces a driving torque of the motor 110. Therefore, it is possible to improve a response of the torque down.

(8-(11)) In the vehicle control device described in (6-(9)), steps S4 and S5 (the first and second traction control units) provide a braking torque to the motor. Therefore, it is possible to improve a response of the traction control.

(9-(13)) In the vehicle control device described in (7-(10)), upon execution of step S5 (the second traction control unit), a generated motor torque is calculated on the basis of the driven wheel rotation speed detected by the driven wheel speed sensor 105 and a driving wheel rotation speed detected by the driving wheel speed sensor 105.

Therefore, it is possible to realize the traction control with an influence of the vibration of the driveline suppressed.

[Embodiment 2]

Next, an embodiment 2 will be explained. Since a basic configuration is the same as that of the embodiment 1, only a different point will be explained.

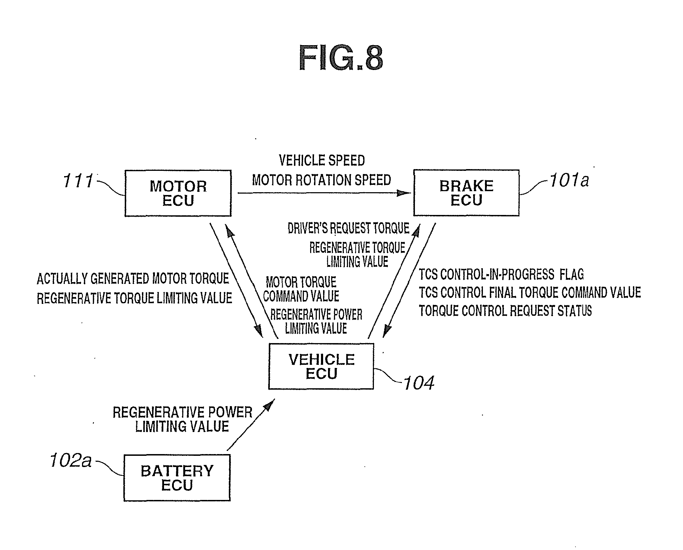

Fig. 8 is a block diagram showing a relationship between the controllers of the vehicle control device of the embodiment 2. The vehicle ECU 104 calculates the reference motor driving torque that is the driver's request torque according to the driver' s shift operation, the driver's accelerator pedal operation and the vehicle speed. Further, in a case where there is no torque command from the brake ECU 101a, i.e. in a case where the torque control request status is non-control request and also the TCS control flag is Low, the vehicle ECU 104 outputs the driver's request torque as the motor torque command value to the motor ECU 111. On the other hand, in a case where the torque command of the brake ECU 101a is present, i.e. in a case where the torque control request status is the torque down request and also the TCS control flag is High, the vehicle ECU 104 outputs, as the motor torque command value, a TCS control prior-to-regenerative-torque-limitation final torque command value that is calculated on the basis of the TCS control-intervening torque command value and the TCS control-in-progress torque command value to the motor ECU 111.

The vehicle ECU 104 finally determines the motor torque command value with consideration given to a communication result with the brake ECU 101a. Further, the vehicle ECU 104 reads a regenerative power limiting value from the battery ECU 102a, and outputs the regenerative power limiting value and the motor torque command value to the motor ECU 111.

The motor ECU 111 computes a regenerative torque limiting value on the basis of the motor torque command value and the regenerative power limiting value according to an efficiency map that is previously experimentally obtained so as to satisfy the regenerative power limiting value. Then, by limiting the TCS control prior-to-regenerative-torque-limitation final torque command value by the regenerative torque limiting value, the actually generated motor torque is limited to the regenerative torque limiting value. The motor ECU 111 outputs the actually generated motor torque and the regenerative torque limiting value to the vehicle ECU 104. The vehicle ECU 104 outputs the driver's request torque and the regenerative torque limiting value to the brake ECU 101a. The brake ECU 101a computes a TCS control brake pressure command value that can be outputted with a torque difference between the motor torque command value and the regenerative torque limiting value being a braking torque, and the braking torque is generated by the brake device 101.

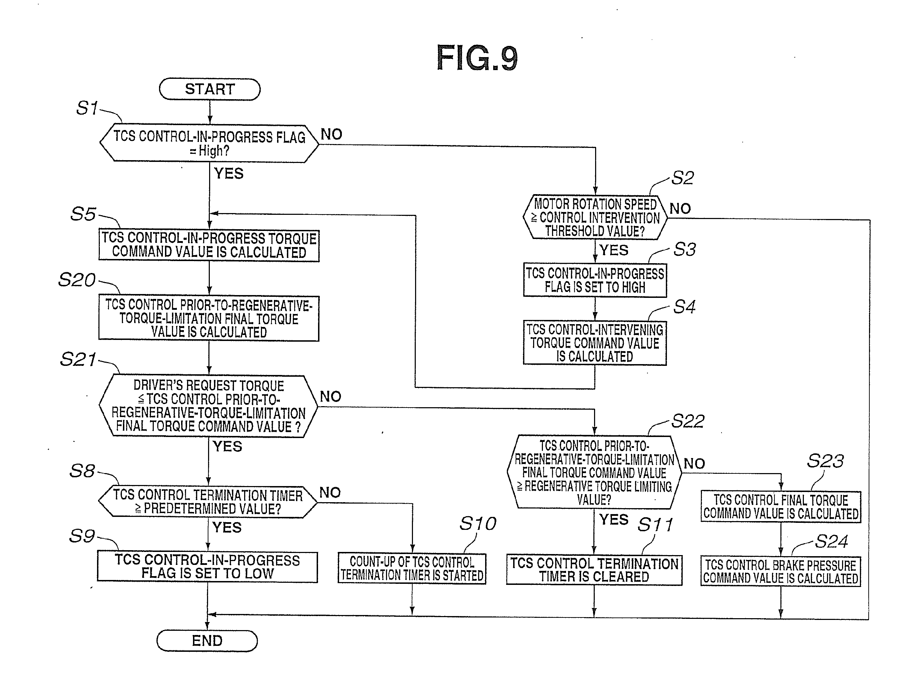

Fig. 9 is a flow chart showing the traction control process in the brake ECU of the embodiment 2. Since steps S1 to S5 and steps S8 to S11 are the same as those of the embodiment 1, only different steps will be explained.

At step 20, the TCS control prior-to-regenerative-torque-limitation final torque value is calculated on the basis of the driver's request torque, the TCS control-intervening torque command value and the TCS control-in-progress torque command value.

At step S21, a judgment is made as to whether or not the driver's request torque is the TCS control prior-to-regenerative-torque-limitation final torque command value or less. When judging that it is the TCS control prior-to-regenerative-torque-limitation final torque command value or less, since the TCS control is unnecessary, the routine proceeds to step S8. On the other hand, when the TCS control prior-to-regenerative-torque-limitation final torque command value is smaller than the driver's request torque, since the TCS control is necessary, the routine proceeds to step S22.

At step S22, a judgment is made as to whether or not the TCS control prior-to-regenerative-torque-limitation final torque command value is the regenerative torque limiting value or greater. When judging that it is the regenerative torque limiting value or greater, the TCS control prior-to-regenerative-torque-limitation final torque command value is set as the TCS control final torque command value, and the routine proceeds to step S11. On the other hand, when the TCS control prior-to-regenerative-torque-limitation final torque command value is smaller than the regenerative torque limiting value, the routine proceeds to step S23, and since the torque which the motor 110 can output is limited by the regenerative torque limiting value, the regenerative torque limiting value is set as the TCS control final torque command value.

At step S24 , the TCS control brake pressure command value, which can be outputted with a torque difference between the TCS control prior-to-regenerative-torque-limitation final torque command value and the regenerative torque limiting value being a braking torque, is computed, and the braking torque is generated by the brake device 101, thereby achieving the TCS control.

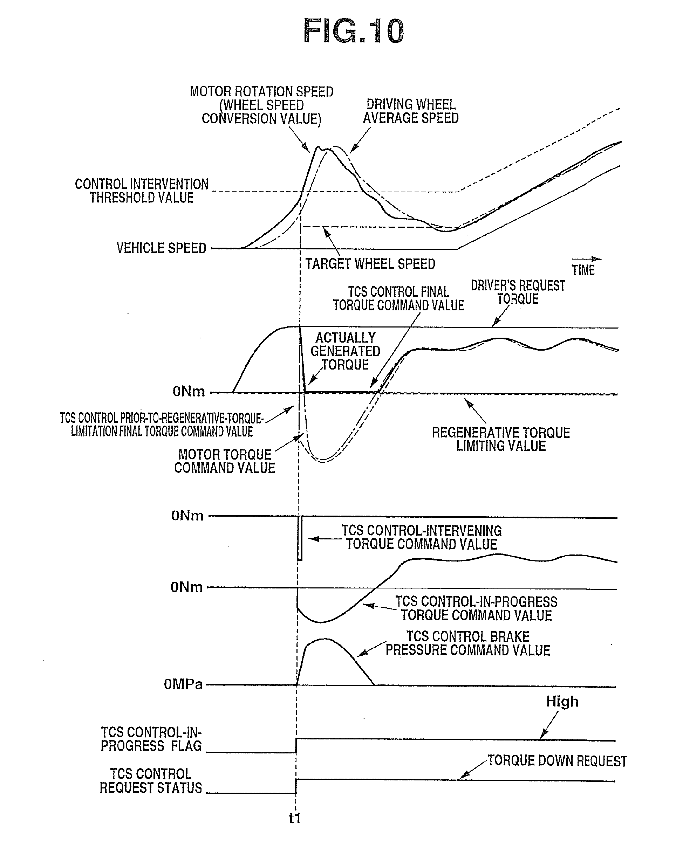

Next, operation according to the above control flow will be explained. Fig. 10 is a time chart of the traction control of the embodiment 2. The operation during the TCS control of the vehicle control device of the embodiment 2 is basically same as that of the embodiment1. However, in the vehicle control device of the embodiment 2, when the TCS control prior-to-regenerative-torque-limitation final torque command value is limited by the regenerative torque limiting value, the braking torque is generated by the TCS control brake pressure command value, which can be outputted with the torque difference between the TCS control prior-to-regenerative-torque-limitation final torque command value and the regenerative torque limiting value being the braking torque.

Therefore, when the motor rotation speed exceeds the control intervention threshold value at time t1, the TCS control intervenes. At this time, from a viewpoint of the control that limits the motor torque by feedforward control, the TCS control - intervening torque command value is provided upon the intervention of the TCS control. At this time, when the TCS control prior-to-regenerative-torque-limitation final torque command value is limited by the regenerative torque limiting value, the TCS control brake pressure command value is computed, and the braking torque is provided. With this control, even in a case where the TCS control prior-to-regenerative-torque-limitation final torque command value can not be outputted depending on a state of the high voltage battery 102, the driving wheel slip can be effectively suppressed by the fact that the braking torque is provided by the brake device 101.

As explained above, the embodiment 2 has the following configuration, operation and effect, in addition to the configuration, the operation and the effect of the embodiment 1.

(10-(5)) A vehicle control device comprises: a motor that is connected to a driving wheel of a vehicle via a drive shaft 109a, a differential gear 109b and a speed reduction mechanism 109c and generates a torque to drive the driving wheel; a resolver 110a (a motor rotation speed detection device) that detects a rotation speed of the motor 110; a wheel speed sensor 105 (a wheel speed detection device) that detects a rotation speed of a driven wheel of the vehicle; step S2 that judges whether or not a detected motor rotation speed is a control intervention threshold value or greater (a driving wheel slip state detection unit that detects a slip state of the driving wheel on the basis of a difference between a detected motor rotation speed and a detected driven wheel rotation speed) ; a TCS control unit (a traction control unit) that, when it is judged by step S2 that the motor rotation speed is the control intervention threshold value or greater (when the slip of the driving wheel is detected), reduces the number of revolutions of the driving wheel by reducing a driving torque of the motor 110; a brake device 101 that provides a braking torque to the driving wheel; and step S24 (a second traction control unit) that is provided separately from the TCS control unit; and wherein step S24 (the second traction control unit) controls the number of revolutions of the driving wheel by the brake device 101.

Since the braking torque of the brake device 101 is provided in addition to the torque down of the motor 110, the control can be perf ormedby two traction control units, which can extend the range of the control.

(11-(6)) In the vehicle control device described in (10-(5)), after the reduction of the driving torque of the motor 110 is executed by the TCS control unit, step S24 is performed.

Therefore, it is possible to prevent the controls from interfering with each other while suppressing the vibration of the driveline.

(12-(7)) The vehicle control device described in (10-(5)) further comprises: a wheel speed sensor 105 (a second wheel speed detection device) that detects a rotation speed of the driving wheel; and wherein, upon execution of a brake control by step S24, a generated motor torque is calculated on the basis of the driven wheel rotation speed detected by the wheel speed sensor 105 and a driving wheel rotation speed detected by the wheel speed sensor 105.

Therefore, it is possible to suppress an influence of the vibration of the driveline.

(13-(12)) A vehicle control device comprises: a motor 110 that is connected to a driving wheel of a vehicle via a speed reduction mechanism 109c and a drive shaft 109a and generates a torque to drive the driving wheel; a resolver 110a (a motor rotation speed detection device) that detects a rotation speed of the motor 110; a wheel speed sensor 105 (a driven wheel speed detection device) that detects a rotation speed of a driven wheel of the vehicle; a wheel speed sensor 105 (a driving wheel speed detection device) that detects a rotation speed of a driving wheel of the vehicle; step S2 (a driving wheel slip state detection unit) that detects a slip state of the driving wheel on the basis of a difference between a detected motor rotation speed and a detected driven wheel rotation speed; step S4 (a first traction control unit) that calculates a TCS control-intervening torque command value that reduces a driving torque generated by the driving wheel when the slip of the driving wheel is detected by step S2; step S5 and step S24 (a second traction control unit) that calculate a TCS control-in-progress torque command value andaTCS control brake pressure command value that suppress the driving torque generated by the driving wheel on the basis of a detected driving wheel rotation speed and a detected driven wheel speed, subsequently to step S4 ; and a brake device 101 that provides a braking torque to the driving wheel; and wherein step S24 (the second traction control unit) controls the driving torque generated by the driving wheel with respect to a road surface by the brake device 101.

Since the braking torque of the brake device 101 is provided in addition to the torque down of the motor 110, the control can be performed by two traction control units, which can extend the range of the control.

(14-(14)) A vehicle control device comprises: a motor 110 that is connected to a driving wheel of a vehicle via a speed reduction mechanism 109c and a drive shaft 109a to drive the driving wheel; a brake device 101 that generates a mechanical braking force to at least the driving wheel; a resolver 110a (a motor rotation speed detection device) that detects a rotation speed of the motor 110; a wheel speed sensor 105 (a driven wheel speed detection device) that detects a rotation speed of a driven wheel of the vehicle; a wheel speed sensor 105 (a driving wheel speed detection device) that detects a rotation speed of a driving wheel of the vehicle; a target wheel speed calculation section 601 of a brake ECU 101a that calculates a target wheel speed of the driving wheel on the basis of a wheel rotation speed detected by the wheel speed sensor 105 (the each wheel speed detection device) ; and step S2 (a driving wheel slip state detection unit) that detects a slip state of the driving wheel on the basis of a difference between a detected motor rotation speed and a detected driven wheel rotation speed, and wherein when the slip of the driving wheel is detected by step S2 (the driving wheel slip state detection unit), a traction control of step S4 and step S5 (a first traction control) that reduce a torque of the motor 110 so that the rotation speed of the driving wheel of the vehicle converges on a calculated target wheel speed is performed, and subsequently to the traction control, step S24 (a second traction control) that controls the number of revolutions of the driving wheel by the brake device 101 on the basis of a detected driving wheel rotation speed and a detected driven wheel speed is performed.

Therefore, by detecting the slip early, an early intervention of the traction control can be realized and control accuracy can be improved, then the slip and vibration caused by the slip can be effectively suppressed.

(15-(15)) The vehicle control device described in (14-(14)) further comprises: a vehicle ECU 104 (a vehicle controller) having a request torque calculation unit that calculates driver's request torque on the basis of driver's accelerator pedal operation amount; a brake ECU 101a (a brake controller) controlling the brake device 101; and a motor ECU 111 (a motor controller) controlling the rotation speed of the motor 110, and wherein the brake ECU 101a is provided with step S2 (the driving wheel slip state detection unit), and step S4 and step S5 (the first traction control) are performed by outputting a motor torque command value to the motor ECU 111 by the vehicle ECU 104 on the basis of a command output signal of the traction control from the brake ECU 101a.

Since a control process is executed mutually in each ECU, the slip state can be effectively suppressed.

(16-(17)) In the vehicle control device described in (14-(14)), when calculating a TCS control-intervening torque command value of step S4 (when performing the first traction control), a torque down ratio (a reduction amount of the driving torque) of the motor 110 is calculated on the basis of the detected motor rotation speed and the detected driving wheel rotation speed.

Therefore, a proper torque down ratio with consideration given to the slip state (a road surface state) can be set.

(17-(18)) The vehicle control device described in (14-(14)) further comprises: a reference motor driving torque calculation unit that calculates a reference motor driving torque according to driver's accelerator pedal operation amount, and wherein at step S4, a torque down ratio (a torque reduction ratio)with respect to the reference motor driving torque is calculated on the basis of the detected motor rotation speed and the detected driving wheel rotation speed, and the driving torque of the motor is reduced on the basis of the calculated torque down ratio (the torque reduction ratio).

Therefore, a proper torque down ratio with consideration given to the slip state (a road surface state) can be set.

(18-(19)) In the vehicle control device described in (14-(14)), in the traction control at step S4 and step S5, a braking torque is provided to the motor 110. Therefore, it is possible to improve a response in the suppression of the slip state in the traction control. (19-(20)) In the vehicle control device described in (14-(14)), when calculating a TCS control-in-progress torque command value of step S5 (upon execution of the second traction control), a generated motor torque is calculated on the basis of the driven wheel rotation speed detected by the wheel speed sensor 105 and the driving wheel rotation speed detected by the wheel speed sensor 105.

Therefore, it is possible to suppress an influence of the vibration of the driveline.

Although the present invention has been explained on the basis of the embodiments above, the present invention is not limited to the embodiments above. (20-(16)) The vehicle control device described in (14-(14)) further comprises: a vehicle controller having a request torque calculation unit that calculates driver's request torque on the basis of driver's accelerator pedal operation amount; a motor controller controlling the rotation speed of the motor, and wherein the vehicle controller is provided with the driving wheel slip state detection unit, and the first traction control is performed by outputting a motor torque command value to the motor controller by the vehicle controller. By forming a system configuration without the brake controller, the vehicle control device can be applied to not a braking side system but a driving side system.

**EXPLANATION OF REFERENCE**

| | |
|---|---|
| 101 | brake device |
| 101b | hydraulic pressure control unit |
| 102 | high voltage battery |
| 105 | wheel speed sensor |
| 106 | CAN communication line |
| 109a | drive shaft |
| 109b | differential gear |
| 109c | speed reduction mechanism |
| 110 | motor |
| 110a | resolver |
| 101a | brake ECU |
| 102a | battery ECU |
| 104 | vehicle ECU |
| 111 | motor ECU |
| W/C | wheel cylinder |

**Claims**

1. A vehicle control device comprising:

   a motor that is connected to a driving wheel of a vehicle via a speed reduction mechanism and a drive shaft and generates a torque to drive the driving wheel;

   a motor rotation speed detection device that detects a rotation speed of the motor;
   a wheel speed detection device that detects a rotation speed of a driven wheel of the vehicle;
   a driving wheel slip state detection unit that detects a slip state of the driving wheel on the basis of a difference between a detected motor rotation speed and a detected driven wheel rotation speed; and
   a traction control unit that reduces the number of revolutions of the driving wheel when the slip of the driving wheel is detected by the driving wheel slip state detection unit.

2. The vehicle control device as claimed in claim 1, wherein:

   the traction control unit reduces a driving torque of the motor.

3. The vehicle control device as claimed in claim 2, wherein:

   the traction control unit provides a braking torque to the motor.

4. The vehicle control device as claimed in claim 2, further comprising:

   a second wheel speed detection device that detects a rotation speed of the driving wheel; and
   a reference motor driving torque calculation unit that calculates a reference motor driving torque according to driver's accelerator pedal operation amount, and wherein
   the traction control unit calculates a torque down ratio with respect to the reference motor driving torque on the basis of the detected motor rotation speed and a detected driving wheel rotation speed, and reduces the driving torque of the motor on the basis of the calculated torque down ratio.

5. The vehicle control device as claimed in claim 2, further comprising:

   a brake device that provides a braking torque to the driving wheel; and
   a second traction control unit that is provided separately from the traction control unit, and wherein
   the second traction control unit controls the number of revolutions of the driving wheel by the brake device.

6. The vehicle control device as claimed in claim 5, wherein:

after the reduction of the driving torque of the motor is executed by the traction control unit, the second traction control unit performs the control of the number of revolutions of the driving wheel.

7. The vehicle control device as claimed in claim 5, further comprising:

a second wheel speed detection device that detects a rotation speed of the driving wheel; and wherein
upon execution of a brake control by the second traction control unit, a generated motor torque is calculated on the basis of the driven wheel rotation speed detected by the wheel speed detection device and a driving wheel rotation speed detected by the second wheel speed detection device.

8. The vehicle control device as claimed in claim 2, wherein:

the traction control unit calculates a reduction amount of the driving torque of the motor from a difference between the detected motor rotation speed and a detected driving wheel rotation speed.

9. A vehicle control device comprising:

a motor that is connected to a driving wheel of a vehicle via a speed reduction mechanism and a drive shaft and generates a torque to drive the driving wheel;
a motor rotation speed detection device that detects a rotation speed of the motor;
a driven wheel speed detection device that detects a rotation speed of a driven wheel of the vehicle;
a driving wheel speed detection device that detects a rotation speed of the driving wheel of the vehicle;
a driving wheel slip state detection unit that detects a slip state of the driving wheel on the basis of a difference between a detected motor rotation speed and a detected driven wheel rotation speed;
a first traction control unit that reduces a driving torque generated by the driving wheel when the slip of the driving wheel is detected by the driving wheel slip state detection unit; and
a second traction control unit that suppresses the driving torque generated by the driving wheel on the basis of a detected driving wheel rotation speed and a detected driven wheel speed, subsequently to the reduction of the driving torque by the first traction control unit.

10. The vehicle control device as claimed in claim 9, wherein:

the traction control units reduce a driving torque of the motor.

11. The vehicle control device as claimed in claim 9, wherein:

the traction control units provide a braking torque to the motor.

12. The vehicle control device as claimed in claim 9, wherein:

the second traction control unit controls the driving torque generated by the driving wheel with respect to a road surface by a brake device.

13. The vehicle control device as claimed in claim 10, further comprising:

a second wheel speed detection device that detects the rotation speed of the driving wheel; and wherein
upon execution of a brake control by the second traction control unit, a generated motor torque is calculated on the basis of the driven wheel rotation speed detected by the driven wheel speed detection device and a driving wheel rotation speed detected by the driving wheel speed detection device.

14. A vehicle control device comprising:

a motor that is connected to a driving wheel of a vehicle via a speed reduction mechanism and a drive shaft to drive the driving wheel;
a brake device that generates a mechanical braking force to at least the driving wheel;
a motor rotation speed detection device that detects a rotation speed of the motor;
a driven wheel speed detection device that detects a rotation speed of a driven wheel of the vehicle;
a driving wheel speed detection device that detects a rotation speed of the driving wheel of the vehicle;
a target wheel speed calculation section that calculates a target wheel speed of the driving wheel on the basis of a wheel rotation speed detected by the each wheel speed detection device; and
a driving wheel slip state detection unit that detects a slip state of the driving wheel on the basis of a difference between a detected motor rotation speed and a detected driven wheel rotation speed, and
when the slip of the driving wheel is detected by the driving wheel slip state detection unit, a first traction control that reduces a torque of the motor so that the rotation speed of the driving wheel of the vehicle converges on a calculated target wheel speed being performed, and subsequently to the first traction control, a second traction control that controls the number of revolutions of the driving wheel by the brake device on the basis of a detected driving wheel rotation speed and a detected driven wheel speed being performed.

**15.** The vehicle control device as claimed in claim 14, further comprising:

a vehicle controller having a request torque calculation unit that calculates driver's request torque on the basis of driver's accelerator pedal operation amount;
a brake controller controlling the brake device; and
a motor controller controlling the rotation speed of the motor, and wherein
the brake controller is provided with the driving wheel slip state detection unit, and
the first traction control is performed by outputting a motor torque command value to the motor controller by the vehicle controller on the basis of a command output signal of the traction control from the brake controller.

**16.** The vehicle control device as claimed in claim 14, further comprising:

a vehicle controller having a request torque calculation unit that calculates driver's request torque on the basis of driver's accelerator pedal operation amount; and
a motor controller controlling the rotation speed of the motor, and wherein
the vehicle controller is provided with the driving wheel slip state detection unit, and
the first traction control is performed by outputting a motor torque command value to the motor controller by the vehicle controller.

**17.** The vehicle control device as claimed in claim 14, wherein:

when performing the first traction control, a reduction amount of the driving torque of the motor is calculated on the basis of the detected motor rotation speed and the detected driving wheel rotation speed.

**18.** The vehicle control device as claimed in claim 14, further comprising:

a reference motor driving torque calculation unit that calculates a reference motor driving torque according to driver's accelerator pedal operation amount, and wherein
in the first traction control, a torque down ratio with respect to the reference motor driving torque is calculated on the basis of the detected motor rotation speed and the detected driving wheel rotation speed, and the driving torque of the motor is reduced on the basis of the calculated torque down ratio.

**19.** The vehicle control device as claimed in claim 14, wherein:

in the first traction control, a braking torque is provided to the motor.

**20.** The vehicle control device as claimed in claim 14, wherein:

upon execution of the second traction control, a generated motor torque is calculated on the basis of the detected driven wheel rotation speed and the detected driving wheel rotation speed.

# FIG.1

# FIG.2

# FIG.3

START

S1 — TCS CONTROL-IN-PROGRESS FLAG = High? —— NO

YES

S2 — MOTOR ROTATION SPEED ≥ CONTROL INTERVENTION THRESHOLD VALUE? —— NO

YES

S3 — TCS CONTROL-IN-PROGRESS FLAG IS SET TO HIGH

S4 — TCS CONTROL-INTERVENING TORQUE COMMAND VALUE IS CALCULATED

S5 — TCS CONTROL-IN-PROGRESS TORQUE COMMAND VALUE IS CALCULATED

S6 — TCS CONTROL FINAL TORQUE COMMAND VALUE IS CALCULATED

S7 — DRIVER'S REQUEST TORQUE ≤ TCS CONTROL FINAL TORQUE COMMAND VALUE? —— NO

YES

S8 — TCS CONTROL TERMINATION TIMER ≥ PREDETERMINED VALUE? —— NO

YES

S9 — TCS CONTROL-IN-PROGRESS FLAG IS SET TO LOW

S10 — COUNT-UP OF TCS CONTROL TERMINATION TIMER IS STARTED

S11 — TCS CONTROL TERMINATION TIMER IS CLEARED

END

# FIG.4

MOTOR ROTATION SPEED → TORQUE DOWN RATIO CALCULATION SECTION

DRIVING WHEEL AVERAGE SPEED →

TORQUE DOWN RATIO → × → TCS CONTROL-INTERVENING TORQUE COMMAND

ACTUALLY GENERATED MOTOR TORQUE

# FIG.5

TORQUE DOWN RATIO

SPEED DEVIATION
(MOTOR ROTATION SPEED - DRIVING WHEEL AVERAGE SPEED)

# FIG.6

*601*

DRIVEN WHEEL
AVERAGE SPEED → | TARGET WHEEL SPEED CALCULATION SECTION | → TARGET WHEEL SPEED → | + / − | → | PID CONTROL | → TCS CONTROL-IN-PROGRESS TORQUE COMMAND

ROAD SURFACE μ
ESTIMATION VALUE →

DRIVING WHEEL
AVERAGE SPEED

# FIG.7

MOTOR ROTATION SPEED
(WHEEL SPEED CONVERSION VALUE)    DRIVING WHEEL
AVERAGE SPEED

CONTROL INTERVENTION
THRESHOLD VALUE

VEHICLE SPEED

TARGET WHEEL
SPEED    DRIVER'S REQUEST
TORQUE    TIME

ACTUALLY
GENERATED
TORQUE

0Nm

TCS CONTROL FINAL TORQUE COMMAND VALUE

MOTOR TORQUE COMMAND VALUE

0Nm

TCS CONTROL-INTERVENING
TORQUE COMMAND VALUE

0Nm

TCS CONTROL-IN-PROGRESS
TORQUE COMMAND VALUE    High

TCS CONTROL-IN-PROGRESS FLAG

TCS CONTROL REQUEST STATUS    TORQUE DOWN REQUEST

t1

14

# FIG.8

MOTOR ECU *111*

BRAKE ECU *101a*

VEHICLE ECU *104*

BATTERY ECU *102a*

VEHICLE SPEED
MOTOR ROTATION SPEED

DRIVER'S REQUEST TORQUE
REGENERATIVE TORQUE
LIMITING VALUE

ACTUALLY GENERATED MOTOR TORQUE
REGENERATIVE TORQUE LIMITING VALUE

MOTOR TORQUE
COMMAND VALUE
REGENERATIVE POWER
LIMITING VALUE

TCS CONTROL-IN-PROGRESS FLAG
TCS CONTROL FINAL TORQUE COMMAND VALUE
TORQUE CONTROL REQUEST STATUS

REGENERATIVE POWER
LIMITING VALUE

# FIG.9

START

S1 — TCS CONTROL-IN-PROGRESS FLAG = High? — NO

YES

S5 — TCS CONTROL-IN-PROGRESS TORQUE COMMAND VALUE IS CALCULATED

S2 — MOTOR ROTATION SPEED ≥ CONTROL INTERVENTION THRESHOLD VALUE? — NO

YES

S3 — TCS CONTROL-IN-PROGRESS FLAG IS SET TO HIGH

S4 — TCS CONTROL-INTERVENING TORQUE COMMAND VALUE IS CALCULATED

S20 — TCS CONTROL PRIOR-TO-REGENERATIVE-TORQUE-LIMITATION FINAL TORQUE VALUE IS CALCULATED

S21 — DRIVER'S REQUEST TORQUE ≤ TCS CONTROL PRIOR-TO-REGENERATIVE-TORQUE-LIMITATION FINAL TORQUE COMMAND VALUE? — NO

YES

S22 — TCS CONTROL PRIOR-TO-REGENERATIVE-TORQUE-LIMITATION FINAL TORQUE COMMAND VALUE ≥ REGENERATIVE TORQUE LIMITING VALUE? — NO

YES

S23 — TCS CONTROL FINAL TORQUE COMMAND VALUE IS CALCULATED

S8 — TCS CONTROL TERMINATION TIMER ≥ PREDETERMINED VALUE? — NO

YES

S9 — TCS CONTROL-IN-PROGRESS FLAG IS SET TO LOW

S10 — COUNT-UP OF TCS CONTROL TERMINATION TIMER IS STARTED

S11 — TCS CONTROL TERMINATION TIMER IS CLEARED

S24 — TCS CONTROL BRAKE PRESSURE COMMAND VALUE IS CALCULATED

END

EP 2 915 692 A1

# FIG.10

MOTOR ROTATION SPEED
(WHEEL SPEED
CONVERSION VALUE)

DRIVING WHEEL
AVERAGE SPEED

CONTROL INTERVENTION
THRESHOLD VALUE

VEHICLE SPEED

TARGET WHEEL SPEED

TIME

TCS CONTROL FINAL
TORQUE COMMAND VALUE

DRIVER'S REQUEST
TORQUE

ACTUALLY
GENERATED
TORQUE

0Nm

TCS CONTROL PRIOR-TO-REGENERATIVE-TORQUE-
LIMITATION FINAL TORQUE COMMAND VALUE

REGENERATIVE TORQUE
LIMITING VALUE

MOTOR TORQUE
COMMAND VALUE

0Nm

TCS CONTROL-INTERVENING
TORQUE COMMAND VALUE

0Nm

TCS CONTROL-IN-PROGRESS
TORQUE COMMAND VALUE

TCS CONTROL BRAKE
PRESSURE COMMAND VALUE

0MPa

High

TCS CONTROL-IN-
PROGRESS FLAG

TORQUE DOWN REQUEST

TCS CONTROL
REQUEST STATUS

t1

## INTERNATIONAL SEARCH REPORT

| International application No. |
| --- |
| PCT/JP2013/077604 |

A. CLASSIFICATION OF SUBJECT MATTER
*B60L15/20*(2006.01)i, *B60T8/00*(2006.01)i, *B60T8/17*(2006.01)i, *B60W10/188*
(2012.01)i, *B60W30/02*(2012.01)i

According to International Patent Classification (IPC) or to both national classification and IPC

B. FIELDS SEARCHED

Minimum documentation searched (classification system followed by classification symbols)
B60L1/00-15/42, B60T8/00, B60T8/17, B60W10/188, B60W30/02

Documentation searched other than minimum documentation to the extent that such documents are included in the fields searched
Jitsuyo Shinan Koho          1922-1996   Jitsuyo Shinan Toroku Koho   1996-2014
Kokai Jitsuyo Shinan Koho    1971-2014   Toroku Jitsuyo Shinan Koho   1994-2014

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 2005-51889 A  (Toyota Motor Corp.),<br>24 February 2005 (24.02.2005),<br>paragraphs [0017] to [0032]; fig. 1 to 8<br>(Family: none) | 1,2,4,8-10<br>3,5-7,11-20 |
| Y | JP 2008-213632 A  (Toyota Motor Corp.),<br>18 September 2008 (18.09.2008),<br>paragraphs [0023], [0042] to [0054]<br>(Family: none) | 3,5-7,11-20 |
| Y | JP 2009-35191 A  (Toyota Motor Corp.),<br>19 February 2009 (19.02.2009),<br>paragraphs [0027], [0035] to [0053]<br>(Family: none) | 3,5-7,11-20 |

| ☒  Further documents are listed in the continuation of Box C. | ☐  See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    06 January, 2014 (06.01.14) | Date of mailing of the international search report<br>    21 January, 2014 (21.01.14) |
| --- | --- |
| Name and mailing address of the ISA/<br>   Japanese Patent Office | Authorized officer |
| Facsimile No. | Telephone No. |

Form PCT/ISA/210 (second sheet) (July 2009)

**EP 2 915 692 A1**

<table>
<tr><td colspan="2" style="text-align:center"><strong>INTERNATIONAL SEARCH REPORT</strong></td><td colspan="2">International application No.<br>PCT/JP2013/077604</td></tr>
</table>

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2005-51888 A  (Toyota Motor Corp.),<br>24 February 2005 (24.02.2005),<br>paragraphs [0004] to [0015]<br>(Family: none) | 1-20 |
| A | JP 2008-113541 A  (Toyota Motor Corp.),<br>15 May 2008 (15.05.2008),<br>paragraphs [0018] to [0044]<br>& US 2009/0101428 A1    & EP 2070760 A1<br>& WO 2008/041624 A1 | 1-20 |
| A | JP 2008-178216 A  (Hitachi, Ltd.),<br>31 July 2008 (31.07.2008),<br>paragraphs [0041] to [0071]<br>& US 2010/0114447 A1    & EP 2106955 A1<br>& WO 2008/087925 A1 | 1-20 |
| A | JP 2009-33966 A  (Honda Motor Co., Ltd.),<br>12 February 2009 (12.02.2009),<br>paragraph [0043]<br>(Family: none) | 1-20 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011097826 A